# EUROPÄISCHE PATENTSCHRIFT

(11) **EP 3 835 184 B1**
(45) Veröffentlichungstag und Bekanntmachung des Hinweises auf die Patenterteilung: **31.08.2022**
(21) Anmeldenummer: 20211557.2
(22) Anmeldetag: 03.12.2020
(51) Int. Cl.: B62J 11/00

(54) **ZWEIRAD MIT EINEM HALTEELEMENT FÜR LASTEN AN DEM ZWEIRAD, INSBESONDERE AN EINEM ROLLERFAHRZEUG, UND ZWEIRAD, INSBESONDERE ROLLERFAHRZEUG**
TWO-WHEELED VEHICLE WITH A HOLDING ELEMENT FOR LOADS ON THE TWO-WHEELED VEHICLE, IN PARTICULAR ON A SCOOTER, AND TWO-WHEELED VEHICLE, PARTICULARLY A SCOOTER
VEHHICULE A DEUX ROUES AVEC UND ÉLÉMENT DE FIXATION POUR CHARGES SUR LE VÉHICULE À DEUX ROUES, EN PARTICULIER SUR UN VÉHICULE SCOOTER, ET DEUX ROUES, EN PARTICULIER VÉHICULE SCOOTER

(30) Priorität: 10.12.2019 DE 102019133768
(43) Veröffentlichungstag der Anmeldung: 16.06.2021
(73) Patentinhaber: Kaufmann Sortimentsgrosshandel GmbH, 30167 Hannover (DE)
(72) Erfinder: Käse, Michael, 30167 Hannover (DE); Lipke, Janik, 22927 Großhansdorf (DE)
(74) Vertreter: Jabbusch, Matthias

(56) Entgegenhaltungen:
- DE-A1- 3 902 824
- DE-U1- 9 317 840
- US-A- 4 828 151

## Beschreibung

Die Erfindung betrifft ein Zweirad, insbesondere ein Rollerfahrzeug, mit einem Zweiradrahmen mit Steuerkopf zum Aufnehmen einer Vorderradgabel und zum Ausrüsten mit einem Halteelement für Lasten dem Zweirad, wobei das Halteelement einen Anlageabschnitt (12) zum Anlegen an einen Anlagebereich des Zweirads aufweist und ein den Anlageabschnitt (12) bei Anlage an den Anlagebereich fixierendes Festlegemittel für den Anlageabschnitt (12) aufweist.

Zweiräder werden neben der Beförderung von Personen auch für das Befördern von Lasten benutzt. Für als Fahrräder ausgebildete Zweiräder haben sich dabei verschiedenste Gepäckaufnahmesysteme ausgebildet. Es gibt Gepäckträger oberhalb des Vorderrades oder auch im Heckbereich des Fahrrades, es sind spezielle Lastenfahrräder entwickelt worden.

Eine relativ junge Fahrzeuggattung sind Rollerfahrzeuge mit elektrischem Antrieb. Diese auch als E-Scooter bezeichneten Fahrzeuge dienen dem Personentransport auf kurzen Wegen, sie können beispielsweise im Kraftfahrzeug mitgeführt werden und nach Parken desselben für letzte Wege genutzt werden. Derartige elektrische Rollerfahrzeuge sind aufgrund der Möglichkeit, sie beispielsweise in Kraftfahrzeugen oder auch im Nachverkehr mitzunehmen, relativ kompakt ausgebildet.

Daher können sie wohl eine Person aufnehmen, das Gepäck dieser Person muss aber anders transportiert werden, beispielsweise in Taschen oder Rucksäcken. Das Anhängen von Taschen an den Lenker eines Rollerfahrzeuges ist nachteilig, da die Stabilität des Rollerfahrzeuges dann verschlechtert ist.

Der Erfindung liegt daher die Aufgabe zugrunde, ein eingangs genanntes Zweirad mit einem Halteelement aufzuzeigen, das insbesondere ein Rollerfahrzeug ist, wobei die Stabilität des Rollerfahrzeuges nicht wesentlich beeinträchtigt werden soll.

Ein Halteelement wie in oben genannter Ausbildung ist aus der US 4,828,151 A bekannt.

Diese Aufgabe ist erfindungsgemäß dadurch gelöst, dass das Zweirad im Bereich des Steuerkopfes (1) in dem Anlagebereich ein ösenförmig ausgebildetes Anschlagelement (2) hat, an das das Halteelement (3) mit seinem Anlageabschnitt (12) anlegbar ist und durch dessen Öse das Festlegeelement führbar ist.

Das Halteelement des erfindungsgemäßen Zweirades soll Lasten aufnehmen. Dazu ist es jedoch selbst am Zweirad anzuordnen, damit die Lasten letztendlich vom Zweirad, beispielsweise einem elektrischen Rollerfahrzeug, aufgenommen werden. Das Halteelement hat also einen Anlageabschnitt, mit dem es an das Zweirad angelegt wird. Dieses hat dafür einen speziellen Anlagebereich. Nach der Anlage des Anlageabschnittes wird der Anlageabschnitt noch am Zweirad fixiert. Dazu ist das Festlegemittel vorgesehen, das mit dem Anlageabschnitt in diese fixierende Wirkverbindung tritt.

Das Haltelement wird selbst lagesicher am Zweirad befestigt, auf diese Weise kann es dann Lasten aufnehmen.

Die Lösung der Aufgabe ist dadurch gekennzeichnet, dass das Zweirad im Bereich seines Steuerkopfes in einem Anlagebereich ein ösenförmig ausgebildetes Anschlagelement hat, an das das Halteelement mit seinem Anlageabschnitt anlegbar ist und durch dessen Öse das Festlegeelement führbar ist.

Das Zweirad hält das Gegenstück bereit, an das das Halteelement angelegt werden kann und an dem es fixiert wird. Das ösenförmig ausgebildete Anschlagelement kann beispielsweise ein gebogenes Profil sein, das mit seinen Enden am Steuerkopf angeschweißt ist. Bei einem Elektroroller ist durch Verwendung relativ kleiner Räder der Steuerkopf weit dem Erdboden angenähert, so dass am Steuerkopf befestigte Lasten den Schwerpunkt nach unten ziehen. Die Stabilität des Zweirades wird dadurch nicht sehr beeinträchtigt.

Das Halteelement kann auf das ösenförmig ausgebildete Anschlagelement aufgesteckt werden. Nach Einführen des konusförmigen Bolzens, der durch das ösenförmig ausgebildete Anschlagelement hindurchgeführt wird, erfolgt eine Fixierung des Halteelementes am Anschlagelement. Weitere Bauelemente, wie Zwischenadapter oder Ladeflächen sind dann auf das Halteelement aufsteckbar, die Außenkanten des Halteelementes dienen hierfür. In einfacher Weise können also die einzelnen Bauteile der Lastenaufnahme zusammengebaut werden, Werkzeuge sind nicht notwendig, die Hergestellten Aufeinandersteckungen fixieren sich durch aufgelegte Lasten bzw. schon durch die Eigengewichte der aufgesteckten Bauelemente.

Nach einer ersten Weiterbildung der Erfindung ist vorgesehen, dass der Anlageabschnitt des Halteelementes als einteiliger Baukörper ausgebildet ist und einen Einschnitt zum Anlegen an den Anlagebereich des Zweirades hat. Der Anlageabschnitt kann dabei so dimensioniert sein, dass an ihn Kräfte übertragen werden können. Der Einschnitt im einteiligen Baukörper ermöglicht eine Zuordnung zu einem Vorsprung im Anlagebereich des Zweirades, um eine formschlüssige Anlage zu erreichen.

So ist nach einer Weiterbildung der Erfindung vorgesehen, dass der Einschnitt durch Körperwände des Baukörpers begrenzt ist, wobei der Abstand der Körperwände zueinander sich über die Längserstreckung des Baukörpers vergrößert. Zwei Körperwände begrenzen den Einschnitt im Baukörper. Diese beiden Körperwände stehen aber nicht parallel, sondern schräg zueinander. Der Abstand vergrößert sich über die Längserstreckung des Baukörpers, in entgegengesetzter Richtung verkleinert er sich. Damit kann er auf einen Vorsprung im Anlagebereich klemmend angeordnet werden. So kann es möglich sein, dass das Halteelement mit seinem die schräg zueinanderstehenden Körperwände aufweisenden Anlageabschnitt von oben auf einen Vorsprung im Anlagebereich des Zweirades aufgeschoben bzw. aufgesteckt wird.

In den Körperwänden des Baukörpers können einander gegenüberliegende Durchbrüche für das Festlegemittel angeordnet sein. Das Festlegemittel wird durch die Durchbrüche geführt. Dabei kann die Weite eines Durchbruchs größer als die Weite des gegenüberliegenden Durchbruchs sein, wobei das Festlegemittel einen konusförmigen Bolzen umfasst. Das Einführen des konusförmigen Bolzens erfolgt dann über den Durchbruch mit der größeren Weite, der konusförmige Bolzen kann mit einem Vorsprung im Anlagebereich des Zweirades interagieren, bevor er wieder in den Durchbruch mit der geringeren Weite eintritt. So ist es möglich, den Vorsprung im Anlagebereich des Zweirades als Öse auszubilden, die sonst zur Aufnahme eines Fahrradschlosses dienen kann. Auf diese Öse kann das Halteelement aufgesteckt werden, die Durchbrüche werden dann auf Höhe der Öse angeordnet und der konusförmige Bolzen kann durch die Öse geführt werden.

Das Festlegemittel weist nach einer Weiterbildung der Erfindung weiterhin eine Schraube auf, die durch den Durchbruch mit kleinerer Weite hindurch in den Bolzen einschraubbar ist. Auf diese Weise kann der eingeschobene Bolzen noch in seiner Lage in den Durchbrüchen fixiert werden.

Nach einer nächsten Weiterbildung der Erfindung weist es eine Anlagefläche mit Außenkanten zum Anlegen von weiteren Bauelementen auf. Nachdem das Halteelement also selbst sicher am zum Beispiel Elektroroller angebracht wurde kann es weitere Bauelemente aufnehmen. Dies erfolgt über seine Anlagefläche mit den Außenkanten. Die Außenkanten stehen bevorzugt schräg zueinander. An die Außenkanten kann beispielsweise ein bügelförmiger Zwischenadapter aufgesetzt werden, der die Außenkanten vergrößert. Weitere Bauelemente können Ladeflächen und Ladeplatten umfassen, eigene Aufstellräder für eine derartige Ladeplatte sind möglich. Für einen Elektroroller kann mit dem erfindungsgemäßen Halteelement eine Ladefläche zur Verfügung gestellt werden, die beispielsweise zur Aufnahme einer Wasserkiste ausreicht. Das Halteelement und eine Ladefläche oder ein anderes weiteres Bauelement können auch einstückig ausgebildet sein.

Ausführungsbeispiele, aus denen sich weitere erfinderische Merkmale ergeben, sind in der Zeichnung dargestellt. Es zeigen:
- Figur 1:: eine gesprengte Ansicht eines Halteelementes in Annährung an ein Bauteil eines Zweirades und vor Aufnahme eines als Ladefläche ausgebildeten weiteren Bauteils;
- Figur 2a:: weitere Ansichten des Halteelementes nach Figur 1;
- Figur 2c:: weitere Ansichten des Halteelementes nach Figur 1;
- Figur 2d:: weitere Ansichten des Halteelementes nach Figur 1;
- Figur 3:: eine Seitenansicht einer mit dem Halteelement angesetzten Ladefläche;

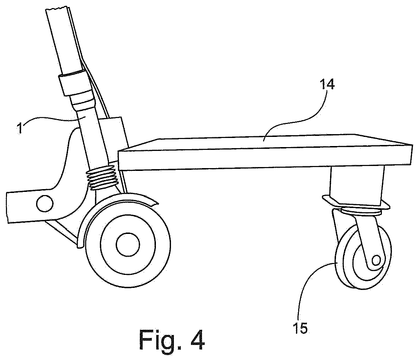

- Figur 4:: eine Teilseitenansicht eines Elektrorollers mit über das Halteelement angesetzter Ladeplatte; und
- Figur 5:: eine andere Ausführung des Halteelements.

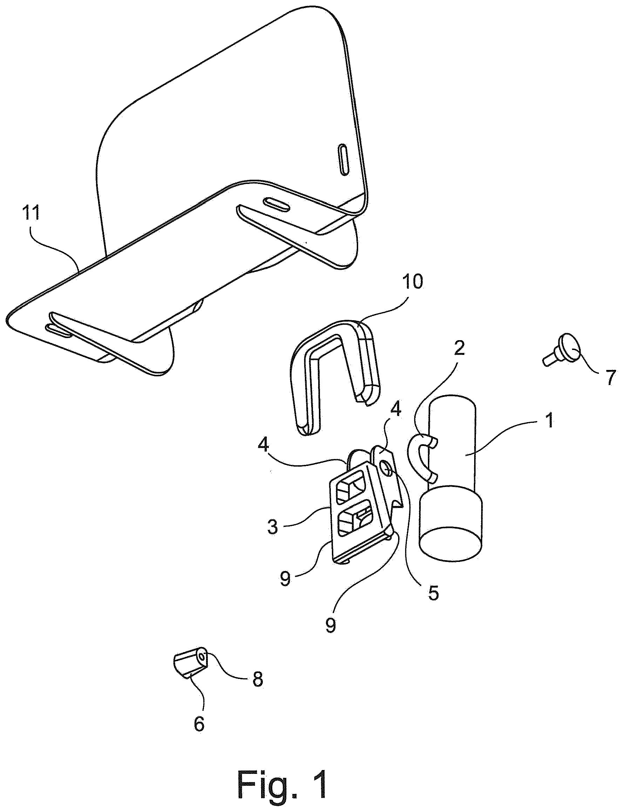

Figur 1 zeigt einen Steuerkopf 1 eines Elektrorollers. Auf der Oberfläche des Steuerkopfes 1 ist ein ösenförmig ausgebildetes Anschlagelement 2 angeordnet. Die Ausrichtung des Anschlagelementes 2 erfolgt parallel zur Längsmittelachse des Steuerkopfes 1.

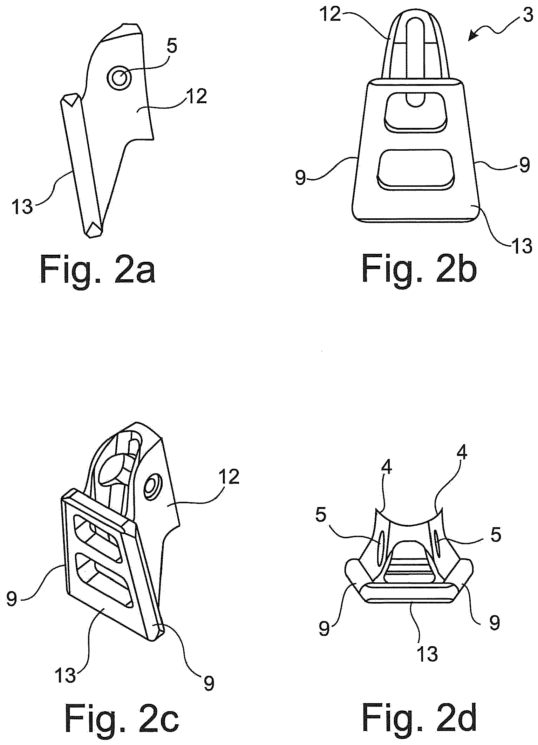

Dem Anschlagelement 2 angenähert ist ein Halteelement 3. Das Halteelement 3 hat einen Anlageabschnitt 12 (Figur 2a-d), mit dem es an das Anschlagelement 2 angelegt werden kann. Diese Anlage erfolgt unter Aufnahme des Anschlagelementes 2 innerhalb des Halteelementes 3. Das Halteelement 3 hat zwei Körperwände 4, die bei Anlage des Halteelementes 3 am Steuerkopf 1 zu beiden Seiten des Anschlagelementes 2 angeordnet sind. Durchbrüche 5 in den Körperwänden 4 ermöglichen ein Einführen eines Bolzens 6 durch die Durchbrüche 5 und durch das Anschlagelement 2 hindurch. Dabei wird der Bolzen 6 durch den Ösenabschnitt des Anschlagelementes 2 geführt. Der Bolzen 6 ist konusförmig ausgebildet, so dass er sich im Anschlagelement 2 bei entsprechender Dimensionierung verklemmt und damit bereits das angesetzte Halteelement 3 fixiert. Die Fixierung kann durch eine Schraube 7 gesichert werden, indem diese Schraube 7 in einen Durchbruch 8 mit Innengewinde im Bolzen 6 eingeschraubt wird.

Auf Außenkanten 9 einer Anlagefläche 13 (Figur 2a-d) des Anlageelementes 3 können dann weitere Bauteile aufgesteckt werden. Figur 1 zeigt als weitere Bauelemente beispielsweise einen Zwischenadapter 10 sowie eine Ladefläche 11.

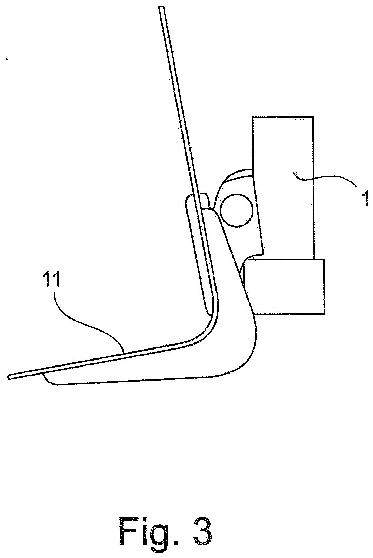

Der Einsatz der Ladefläche 11 ist in Figur 3 gezeigt.

Figuren 2a bis 2d zeigen die spezielle Ausbildung des Halteelementes 3. Das Haltelement 3 hat, wie in Figur 2c gut zu erkennen, zwei Bereiche. Mit dem Anlagebereich wird es selbst am Steuerkopf 1 befestigt. Eine Anlagefläche 13 bildet den zweiten Bereich des Halteelementes 3. An diese können weitere Bauelemente angelegt werden, dabei auch an ihre Außenkanten 9.

Figur 2b zeigt, dass die Außenkanten 9 der Anlagefläche 13 schräg zueinanderstehen. Ein von oben aufgesetztes weiteres Bauteil, wie beispielsweise der Zwischenadapter 10, kann sich dann auf dem Halteelement 3 durch Klemmung festlegen.

In Figur 2d sind die Körperwände 4 zu erkennen, die schräg zueinander verlaufen. Auch die Durchbrüche 5 sind erkennbar, der in der Figur 2d linken Körperwand 4 angeordnete Durchbruch 5 hat eine größere Weite als der gegenüberliegende Durchbruch 5. Figur 2d zeigt noch, dass die Außenkanten 9 der Anlagefläche 13 abgerundet sind.

Figur 3 zeigt den Einsatz einer Ladeplatte 14, die über ein Halteelement 3 an den Steuerkopf 1 des Elektrorollers angesetzt ist. Die Ladeplatte 14 hat ein eigenes Laufrad 15, um Lasten aufnehmen zu können. Dadurch wird der Elektroroller entlastet.

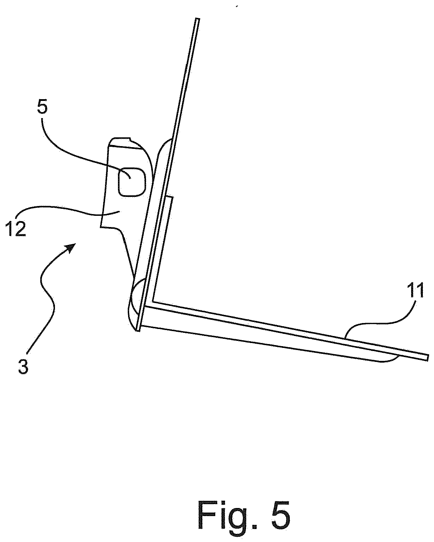

Bei dem Halteelement in Figur 5 ist aus dem Halteelement 3 und einer Ladefläche 11 ein einstückiges Bauteil ausgebildet.

## Patentansprüche

1. Zweirad mit einem Halteelement, insbesondere Rollerfahrzeug, mit einem Zweiradrahmen mit Steuerkopf (1) zum Aufnehmen einer Vorderradgabel und zum Ausrüsten mit dem Halteelement (3) für Lasten an dem wobei das Halteelement einen Anlageabschnitt (12) zum Anlegen an einen Anlagebereich des Zweirads aufweist und ein den Anlageabschnitt (12) bei Anlage an den Anlagebereich fixierendes Festlegemittel für den Anlageabschnitt (12) aufweist, **gekennzeichnet dadurch, dass** das Zweirad im Bereich des Steuerkopfes (1) in dem Anlagebereich ein ösenförmig ausgebildetes Anschlagelement (2) hat, an das das Halteelement (3) mit seinem Anlageabschnitt (12) anlegbar ist und durch dessen Öse das Festlegeelement führbar ist.

2. Zweirad nach Anspruch 1, **dadurch gekennzeichnet, dass** der Anlageabschnitt (12) des Halteelementes (3) als einteiliger Baukörper ausgebildet ist und einen Einschnitt zum Anlegen an den Anlagebereich des Zweirades hat.

3. Zweirad nach Anspruch 2, **dadurch gekennzeichnet, dass** der Einschnitt durch Körperwände (4) des Baukörpers begrenzt ist, wobei der Abstand der Körperwände (4) zueinander sich über die Längserstreckung des Baukörpers vergrößert.

4. Zweirad nach Anspruch 3, **dadurch gekennzeichnet, dass** in den Körperwänden (4) einander gegenüberliegenden Durchbrüche (5, 8) für das Festlegemittel angeordnet sind.

5. Zweirad nach Anspruch 4, **dadurch gekennzeichnet, dass** die Weite eines Durchbruchs größer als die Weite des gegenüberliegenden Durchbruchs ist, wobei das Festlegemittel einen konusförmigen Bolzen (6) umfasst.

6. Zweirad nach Anspruch 5, **dadurch gekennzeichnet, dass** das Festlegemittel weiterhin eine Schraube (7) umfasst, die durch den Durchbruch (8) mit kleinerer Weite hindurch in den Bolzen (6) einschraubbar ist.

7. Zweirad nach einem der vorhergehenden Ansprüche, **dadurch gekennzeichnet, dass** das Halteelement (3) eine Anlagefläche (13) mit Außenkanten (9) zum Anlegen von weiteren Bauelementen hat.

8. Zweirad nach Anspruch 7, **dadurch gekennzeichnet, dass** die Außenkanten (9) zueinander schräg stehen.

9. Zweirad nach Anspruch 7 oder 8, **dadurch gekennzeichnet, dass** ein weiteres Bauelement als bügelförmiger Zwischenadapter (10) zum Vergrößern der Außenflächen ausgebildet ist.

10. Zweirad nach einem der Ansprüche 7 bis 9, **dadurch gekennzeichnet, dass** ein weiteres Bauelement eine Ladefläche (11) umfasst.

11. Zweirad nach einem der Ansprüche 7 bis 10, **dadurch gekennzeichnet, dass** ein weiteres Bauelement eine Ladeplatte (14) mit eigenem Aufstellrad umfasst.

12. Zweirad nach einem der Ansprüche 1 bis 6, **dadurch gekennzeichnet, dass** das Halteelement (3) einstückig zusammen mit einem weiteren Bauelement ausgebildet ist.

## Claims

1. Two-wheeled vehicle with a holding element, in particular, a scooter having a two-wheeled vehicle frame with a steering head (1) for receiving a front wheel fork and for equipping with the holding element (3) for loads on the two-wheeled vehicle, wherein the holding element has a attachment section (12) for applying to a attachment area of the two-wheeled vehicle, and has securing means for the attachment section (12) which fix the attachment section (12) to the attachment area during the application, **characterized in that** the two-wheeled vehicle has an eyelet-shaped stop element (2) in the attachment area in the area of the steering head (1), on which eyelet-shaped stop element the holding element (3) may be applied using its attachment section (12), and through whose eyelet the securing means may be guided.

2. Two-wheeled vehicle according to claim 1, **characterized in that** the attachment section (12) of the holding element (3) is designed as a one-piece structure and has a recess for applying to the attachment area of the two-wheeled vehicle.

3. Two-wheeled vehicle according to claim 2, **characterized in that** the recess is delimited by the structural walls (4) of the structure, wherein the spacing of the structural walls (4) to one another increases across the longitudinal extension of the structure.

4. Two-wheeled vehicle according to claim 3, **characterized in that** apertures (5, 8) for the securing means are arranged opposite one another in the structural walls (4).

5. Two-wheeled vehicle according to claim 4, **characterized in that** the width of one aperture is greater than the width of the opposite aperture, wherein the securing means comprises a conical stud (6) .

6. Two-wheeled vehicle according to claim 5, **characterized in that** the securing means further comprise a screw (7) which may be screwed into the stud (6) through the aperture (8) with the smaller width.

7. Two-wheeled vehicle according to one of the preceding claims, **characterized in that** the holding element (3) has a contact surface (13) with outer edges (9) for the application of additional components.

8. Two-wheeled vehicle according to claim 7, **characterized in that** the outer edges (9) are slanted with respect to one another.

9. Two-wheeled vehicle according to claim 7 or 8, **characterized in that** another component is designed as a U-shaped intermediate adapter (10) to enlarge the outer surfaces.

10. Two-wheeled vehicle according to one of claims 7 to 9, **characterized in that** another component comprises a loading surface (11).

11. Two-wheeled vehicle according to one of claims 7 to 10, **characterized in that** another component comprises a loading plate (14) with its own caster.

12. Two-wheeled vehicle according to one of claims 1 to 6, **characterized in that** the holding element (3) is designed as one piece together with another component.

## Revendications

1. Véhicule à deux roues, doté d'un élément de maintien, notamment scooter, doté d'un cadre de véhicule à deux roues, pourvu d'un actionneur (1), destiné à recevoir une fourche de roue avant et à être équipé avec l'élément de maintien (3) de charges sur le véhicule à deux roues, l'élément de maintien comportant un segment d'appui (12), destiné à être appuyé sur une zone d'appui du véhicule à deux roues et comportant un moyen d'immobilisation pour le segment d'appui (12), fixant le segment d'appui (12) lors de l'appui sur la zone d'appui, **caractérisé en ce que** le véhicule à deux roues détient dans la zone de l'actionneur (1), dans la zone d'appui un élément de butée (2) conçu en forme d'œillet, sur lequel l'élément de maintien (3) est susceptible d'être appuyé par son segment d'appui (12) et à travers l'œillet duquel l'élément d'immobilisation peut être guidé.

2. Véhicule à deux roues selon la revendication 1, **caractérisé en ce que** le segment d'appui (12) de l'élément de maintien (3) est conçu sous la forme d'une structure en monobloc et détient une entaille, destinée à être appuyée sur la zone d'appui du véhicule à deux roues.

3. Véhicule à deux roues selon la revendication 2, **caractérisé en ce que** l'entaille est délimitée par des parois de structure (4) de la structure, l'écart mutuel entre les parois de structure (4) s'agrandissant sur l'extension longitudinale de la structure.

4. Véhicule à deux roues selon la revendication 3, **caractérisé en ce que** dans les parois de structure (4) sont placés des ajours (5, 8) mutuellement opposés, pour le moyen d'immobilisation.

5. Véhicule à deux roues .selon la revendication 4, **caractérisé en ce que** la largeur d'un ajour est supérieure à la largeur de l'ajour opposé, le moyen d'immobilisation comprenant un boulon (6) de forme conique.

6. Véhicule à deux roues selon la revendication 5, **caractérisé en ce que** le moyen d'immobilisation comprend par ailleurs une vis (7), qui est susceptible d'être vissée à travers l'ajour (8) de plus petite largeur dans le boulon (6).

7. Véhicule à deux roues selon l'une quelconque des revendications précédentes, **caractérisé en ce que** l'élément de maintien (3) détient une surface d'appui (13) dotée d'arêtes extérieures (9), destinées à l'appui d'autres éléments de structure.

8. Véhicule à deux roues selon la revendication 7, **caractérisé en ce que** les arêtes extérieures (9) sont placées en oblique les unes des autres.

9. Véhicule à deux roues selon la revendication 7 ou 8, **caractérisé en ce qu'**un élément de structure supplémentaire est conçu sous la forme d'un adaptateur intermédiaire (10) en forme d'étrier, destiné à agrandir les surfaces extérieures.

10. Véhicule à deux roues selon l'une quelconque des revendications 7 à 9, **caractérisé en ce que** l'élément de structure supplémentaire comprend une surface de chargement (11).

11. Véhicule à deux roues selon l'une quelconque des revendications 7 à 10, **caractérisé en ce qu'**un élément de structure supplémentaire comprend un plateau de chargement (14) doté d'une propre roue de pose.

12. Véhicule à deux roues selon l'une quelconque des revendications 1 à 6, **caractérisé en ce que** l'élément de maintien (3) est conçu en monobloc, conjointement avec un élément de structure supplémentaire.
